# EUROPÄISCHE PATENTSCHRIFT

(11) **EP 0 457 018 B1**
(45) Veröffentlichungstag und Bekanntmachung des Hinweises auf die Patenterteilung: **07.12.1994**
(21) Anmeldenummer: 91105577.0
(22) Anmeldetag: 09.04.1991
(51) Int. Cl.: B01D 46/52

(54) **Einordnung von Filtermedien und Abstandshaltern als Filterpack in ein Filtergehäuse**
Disposition of filter elements and separating supports as a package in a filter housing
Disposition des éléments filtrants et des supports séparateurs en bloc dans un boîtier

(30) Priorität: 18.05.1990 DE 4016029
(43) Veröffentlichungstag der Anmeldung: 21.11.1991
(73) Patentinhaber: REFIL Gmbh Filtertechnik + Recycling, D-63674 Altenstadt (DE)
(72) Erfinder: Esch, Hans W., W-6464 Linsengericht 1 (DE)
(74) Vertreter: Müller-Wolff, Thomas, Dipl.-Ing.

(56) Entgegenhaltungen:
- EP-A- 0 248 174
- BE-A- 536 592
- US-A- 2 884 091

## Beschreibung

Die Erfindung betrifft eine Filterpackung mit einer Vielzahl von parallelen Filtermedienflächen, die zwischen jeweils zwei Abstandshaltern angeordnet sind, wobei die Abstandshalter zick-zack-förmig oder wellenförmig ausgebildet sind und die Umkehrkanten der Zick-Zack-Falten bzw. die Hochlinien der Wellen jedes Abstandshalters parallel zueinander verlaufen und wobei die zick-zack-förmigen bzw. wellenformigen Abstandshalter senkrecht zu der angeströmten Frontfläche der Filterpackung verlaufen.

Eine Filterpackung der eingangs genannten Art ist aus der BE-A-536 592 bekannt. Dabei werden die Abstandshalter unregelmäßig zwischen die Seitenflächen einer Filterpackung eingelegt, so daß die Umkehrkanten bzw. Hochlinien der Abstandshalter auch zwischen die Umkehrkanten bzw. die Hochlinien der Wellen eines benachbarten Abstandshalters zu liegen kommen können. Dadurch besteht die Gefahr, daß die Spitzen der Abstandshalter in das Filtermedium eintauchen und es auflockern. Da das Filtermedium fest gepackt und zusammengedrückt ist, ergeben sich unterschiedliche Zugspannungen in der Filterpackung.

Des weiteren ist aus der DE-A-25 57 444 ein Filterpack bekannt, der aus einem Filtergehäuse besteht,in dem, auf dessen Querschnitt abgestimmt, eine Filterfläche in mehrere Lagen mäanderförmig hin- und hergefaltet wird. In jede einzelne Falte ist ein Faltenabstandshalter eingeschoben, der eine Vielzahl von parallelen doppelseitigen Wellen bzw. Falten aufweist.

Die Filterung von beispielsweise Schwebstoffen oder Stäuben aus der Luft- bzw. Gasströmen mit sehr hohen Abscheidegraden (> 99,9% ) soll jedoch auch unter extremen Bedingungen, wie erhöhte Temperatur, hohe Feuchtigkeit und hohem Differenzdruck, sichergestellt sein. Die Ausbildung des Filterpacks nach dem Stand der Technik gewährleistet diese Forderung nicht, da bei Beanspruchung durch erhöhten Differenzdruck in Verbindung mit hoher Feuchtigkeit der Faltenfilter aufreißt und zwar besonders im Bogenbereich des Mäanders der Filterfläche.

Untersuchungen haben ergeben, daß die Auflockerung des Filterpacks und das Aufblähen einzelner Falten zwei der wichtigsten Schadensursachen darstellen. Dies hat seine Ursache im unkoordinierten Einbau der einzelnen gefalteten Abstandshalter, da hierdurch entweder die Kräfte aus dem Differenzdruck bei der Durchströmung zu einem wesentlichen Teil über das Filtermedium weitergeleitet werden. Wie schon erwähnt, dehnt sich das Filtermedium bleibend aus, so daß die Vorspannung abnimmt und der Filterpack sich auflockert.
Des weiteren führt der Überdruck zu einer Verformung des Filtermediums und zum Spiel zwischen den Abstandshaltern und dem Filtermedium. Hierdurch wird eine seitliche Verschiebung der Falten ermöglicht, so daß sich einzelne Falten aufblähen können.
Bei Durchströmung im Filterbetrieb sowie bei der Rückspülung treten außerdem Bewegungen im Filtermedium auf, die dieses vorzeitig zerstören können.

Weiterhin ist durch die DE-C-35 42 963 ein Filterpack bekannt, bei dem die Belastbarkeit im Hinblick auf extreme Betriebsbedinungen und/oder die Abreinigung insoweit verbessert wurde, als die dabei auftretenden Kräfte ausschließlich über die Abstandshalter weitergeleitet werden und die Filtermedienflächen dadurch sicher zugentlastet bleiben. Diese Lösung zeichnet sich dadurch aus, daß die Kanten der Wellen der Abstandshalter, die auf den beiden Seiten einer Filtermedienfläche angeordnet sind, zumindst bereichsweise im Winkel zueinander verlaufen.

Hierbei ergeben sich Kreuzungspunkte der Kanten der Abstandshalter.
An diesen Kreuzungspunkten wird das Filtermedium auf Druck beansprucht. Der Flächendruck auf das Filtermedium ist jedoch sehr hoch. Die Kräfte werden über die Kreuzungspunkte der Abstandshalter auf die weiteren Abstandshalter übertragen.

Die in dieser Schrift beschriebene Schrägplissierung der Abstandshalter bewirkt eine Zone im Wandbereich des Gehäuses, die nicht durchströmbar ist und somit als Filterfläche verloren geht.

Dieser Nachteil soll durch die vorliegende erfindungsgemäße Lösung vermieden werden.

Diese Aufgabe wird erfindungsgemäß durch die in dem Hauptanspruch angegebenen Merkmale gelöst. Die einander zugewandten Umkehrkanten der zick-zack-förmigen Falten bzw. Hochlinien der Wellen der auf den beiden Seiten einer Filtermedienfläche angeordneten Abstandshalter liegen nur durch die Filtermedienfläche getrennt aufeinander.

Gemäß Anspruch 2 ist vorgesehen, daß die Umkehrkanten der zick-zack-förmigen Falten bzw. der Hochlinien der Wellen jedes Abstandshalters gleichen Spitzenabstand voneinander haben, wodurch ein eben ausgerichteter Rost für die Auflage der Filtermedien gebildet wird.

Lediglich zwischen den Umkehrkanten bzw. den Hochlinien der Wellen wird das Filtermedium auf Druck beansprucht, so daß von einem Abstandshalter zum Folgeabstandshalter das Filtermedium keiner Zugbeanspruchung ausgesetzt ist.

Durch diese Ausbildung werden in vorteilhafter Weise Kräfte auf die Filterflächenmedien ausschließlich über die Abstandshalter weitergeleitet, da das zwischen den Abstandshaltern angeordnete Filtermedium in den Berührungsstreifen lediglich auf Druck belastet wird.
Damit ist u.a. auch die Differenzdruckbelastbarkeit der Filterelemente in tiefer Faltung in mehrfacher Weise erhöht. Die Vorspannung des Filterpacks im Rahmen bleibt erhalten, bei hohem Druck wird das Aufblähen einzelner Falten vermieden und die laterale Bewegung der Falten bleibt unterbunden.

Ein weiterer Vorteil besteht darin, daß die Falten der Abstandshalter in Strömungsrichtung ausgebildet sind und das zu filternde Gas oder die Luft sowie das Preßluftrückspülvolumen keine zusätzliche Umlenkung erfährt.
Es besteht eine wesentliche Verminderung der Flächenpressung des empfindlichen Filtermediums in den Abstützbereichen sowie eine Halbierung der durch die Abstandshalter abgedeckten Filterflächen, die ansonsten für den Filterprozeß verloren gehen würden.

Die Erfindung wird durch die beigefügten Zeichnungen in einer beispielsweisen Ausführung näher erläutert.

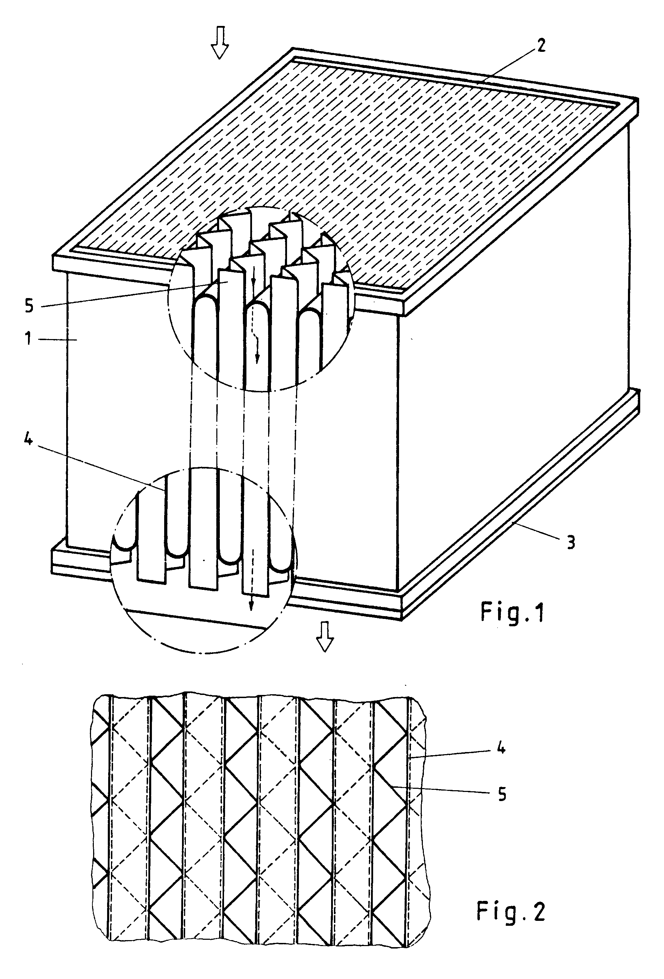

Figur 1 zeigt eine perspektivische Gesamtdarstellung eines Filtergehäuses 1 und seiner Einbauten. Position 2 zeigt die Vergußmasse, Position 3 eine umlaufende Dichtung, Position 1 stellt das Filtergehäuse dar, Position 5 die Abstandshalter sowie Position 4 das mäanderförmig gefaltete Filtermedium.

Figur 2 zeigt die Draufsicht auf das Filter, wobei das Filtermedium 4 sich am Abstandshalter 5 anlegt.

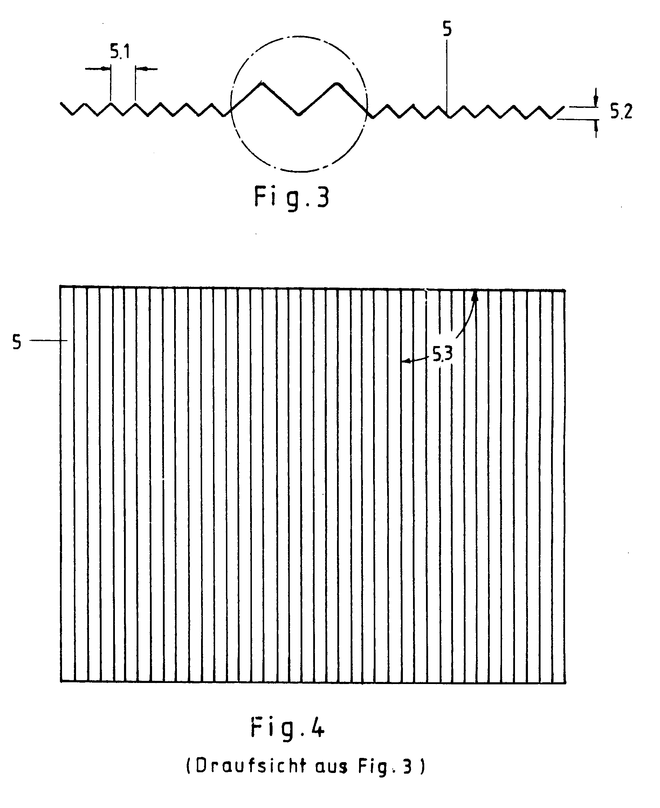

Figur 3 zeigt einen Abstandshalter 5, dessen Mittelbereich stark vergrößert ist.
5.1 zeigt den Spitzenabstand, 5.2 die Spitzenhöhe, während 5.3 in Figur 4 die Parallelität der Winkligkeit ausweist.

Diese Ausführungen sind voll auf die wellenförmig gearbeiteten Abstandshalter 5 übertragbar.
In diesem Fall wird der Spitzenabstand 5.1 nicht durch Umkehrkanten, sondern durch die parallel liegenden Wellen bestimmt.

## Patentansprüche

1. Filterpackung mit einer Vielzahl von parallelen Filtermedienflächen (4), die zwischen jeweils zwei Abstandshaltern (5) angeordnet sind, wobei die Abstandshalter zick-zack-förmig oder wellenförmig ausgebildet sind und die Umkehrkanten der Zick-Zack-Falten bzw. Hochlinien der Wellen jedes Abstandshalters parallel zueinander verlaufen, und wobei die zick-zack-förmigen wellenförmigen Abstandshalter (5) senkrecht zu der angeströmten Frontfläche der Filterpackung verlaufen
dadurch gekennzeichnet,
daß die einander zugewandten Umkehrkanten bzw. Hochlinien der auf den beiden Seiten einer Filtermedienfläche angeordneten Abstandshalter nur durch die Filtermedienfläche getrennt aufeinander liegen.

2. Filterpackung nach Anspruch 1,
dadurch gekennzeichnet,
daß die Umkehrkanten der zick-zack-förmigen Falten bzw. die Kochlinien der Wellen (5.1) jedes Abstandshalters (5) gleichen Spitzenabstand (5.1) voneinander haben, wodurch die Abstandshalter einen eben ausgerichteten Rost für die Auflage des Filtermediums (4) bilden.

## Claims

1. A filter packing with a plurality of parallel filter medium surfaces (4), which are each arranged between two spacers (5), wherein the spaces are zigzag-shaped or corrugated and the returning edges of the zigzag folds or the top lines of the corrugations of each spacer extend in parallel to one another, and wherein the zigzag-shaped or corrugated spacers (5) extend perpendicular to the flowed-against front surface of the filter packing, characterized in that the returning edges or the top lines, facing one another, of the spacers, which are arranged on both sides of a filter medium surface, lie against one another, separated only by the filter medium surface.

2. A filter packing according to claim 1, characterised in that the returning edges of the zigzag-shaped folds or the top lines of the corrugations (5.1) of each spacer (5) have the same peak-to-peak distance (5.1) with respect to one another, by means of which the spacers form a levelly aligned grate for supporting the filter medium (4).

## Revendications

1. Garniture de filtre, comportant une pluralité de surfaces de milieu de filtrage (4) parallèles, disposées chacune entre deux supports écarteurs (5), les supports écarteurs étant réalisés avec une forme en zig-zag ou ondulée et les arêtes d'inversion des plis des zig-zag, respectivement les lignes de sommet des ondulations de chaque support écarteur s'étendant parallèlement les unes aux autres, et les supports écarteurs (5) ondulés en zig-zag s'étendant perpendiculairement par rapport à la surface de la garniture de filtre sur laquelle arrive l'écoulement, caractérisée en ce que les arêtes d'inversion (1) ou les lignes de sommet, tournées les unes vers les autres, des supports écarteurs disposés des deux côtés d'une surface de milieu de filtrage ne sont séparées les unes des autres que par l'épaisseur du milieu de filtrage.

2. Garniture de filtre selon la revendication 1, caractérisée en ce que les arêtes d'inversion des plis en zig-zag ou les lignes de sommet des ondulations (5.1) de chaque support écarteur (5) ont un espacement entre pointes (5.1) égal, faisant que les supports écarteurs constituent une grille à orientation, destinée à la pose du milieu de filtrage (4).
